# DEMANDE DE BREVET EUROPEEN

(11) **EP 0 644 663 A1**
(43) Date de publication de la demande: **22.03.1995**
(21) Numéro de dépôt: 94402093.2
(22) Date de dépôt: 21.09.1994
(51) Int. Cl.: H04B 1/66

(54) **Procédé et dispositif pour la synchronisation dans un système de transmission numérique à étalement de spectre par séquence directe**

(30) Priorité: 22.09.1993 FR 9311260
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Delarue, Philippe, F-78340 Louveciennes (FR); Le Garrec, Guy, F-95110 Sannois (FR); Lucidarme, Thierry Jean, F-92310 Sevres (FR)

(57) **Abrégé**

L'invention consiste, à l'émission, à synchroniser l'horloge du code pseudo-aléatoire avec l'horloge de cadencement des données et à synchroniser les données sur le code d'étalement, la synchronisation des données sur le code d'étalement étant effectuée pour une position du code correspondant à un état binaire prédéterminé. En outre, à l'émission, un codage supplémentaire "transparent" est introduit sur un bit de donnée à chaque fois que le code d'étalement est dans une position correspondant à un état binaire prédéterminé. Ce codage supplémentaire permet à la réception d'effectuer une démodulation cohérente sans ambigüité de phase.

## Description

La présente invention concerne un procédé et un dispositif de transmission numérique à étalement de spectre par séquence directe pour une liaison à haut débit, et plus particulièrement un système à étalement de spectre à modulation de phase synchrone du code d'étalement par les données et à démodulation de phase sans ambigüité. Elle peut être utilisée dans tous les systèmes de transmission à spectre étalé, par séquence directe, et notamment dans le cadre d'un faisceau Hertzien haut débit, ou dans le cadre d'une liaison en temps réel et à haut débit entre un mobile et une station de réception telle que par exemple, une transmission radio lors d'une course automobile.

Dans les systèmes de transmission numérique, il est souvent indispensable, pour contrôler la synchronisation du système de réception, de rajouter aux données numériques à transmettre des mots de synchronisation et des bits de transition appelés bits de bourrage qui rendent complexe la restitution des données en réception.

Par ailleurs, pour pouvoir décoder les informations, un système de réception en télémesure doit retrouver l'horloge de cadencement des données. Cette condition nécessite, dans les systèmes classiques, la mise en oeuvre de lourds moyens de reconstitution d'horloge, tels que l'utilisation d'une boucle quadratique.

En outre, lorsque les données sont transmises par étalement de spectre à séquence directe après codage par un code d'étalement au moyen d'une modulation à deux états de phase MP2, à la réception, la restitution du signal utile est effectuée avec une ambigüité de phase de π. Pour lever cette ambigüité, il est alors nécessaire, à la réception, d'effectuer une démodulation quadratique complexe.

Il est également connu de s'affranchir de l'ambigüité de phase en utilisant à l'émission, une modulation différentielle de type DPSK (en anglais differential phase shift keying) où l'information est codée dans les transitions, et en effectuant à la réception, une démodulation différentielle. Cependant, la démodulation DPSK présente l'inconvénient d'être non cohérente : les bits d'informations sont traités deux par deux, ce qui entraîne une dégradation de trois décibels du rapport signal à bruit par rapport à une démodulation cohérente.

La présente invention a pour but de pallier les inconvénients des dispositifs connus et propose un système de transmission numérique à étalement de spectre par séquence directe qui ne nécessite pas une reconstitution de l'horloge des données, qui ne nécessite pas l'introduction de bit de bourrage et qui ne présente pas d'ambigüité de phase dans le cas d'une démodulation MP2. A l'émission, les données à transmettre et le code pseudo-aléatoire qui les étale sont synchronisés et additionnés modulo 2, ce qui permet à la réception de retrouver l'horloge de cadencement des données. Par ailleurs, l'introduction à l'émission, d'un codage supplémentaire "transparent" sur un bit de donnée à chaque fois que le code d'étalement est dans une position correspondant à un état binaire prédéterminé, permet à la réception d'effectuer une démodulation cohérente sans ambiguïté de phase en utilisant des moyens simples.

Selon l'invention, le procédé de transmission numérique à étalement de spectre par séquence directe consiste, à l'émission, d'une part à synchroniser l'horloge du code pseudo-aléatoire avec l'horloge de cadencement des données et à synchroniser les données sur le code d'étalement, la synchronisation des données sur le code d'étalement étant effectuée pour une position du code correspondant à un état binaire prédéterminé, d'autre part à effectuer un codage supplémentaire sur un bit de donnée à chaque fois que le code d'étalement est dans la position correspondant à l'état binaire prédéterminé.

L'invention concerne également un dispositif de transmission numérique à étalement de spectre par séquence directe comportant un émetteur et au moins un récepteur, l'émetteur comportant des moyens de génération d'un code pseudo-aléatoire à partir d'une horloge de code et des moyens de corrélation du code avec des données constituant un message à transmettre, ces données ayant un débit imposé par une horloge de cadencement, et le récepteur comportant des moyens de génération d'un code pseudo-aléatoire identique à celui utilisé à l'émission et calé sur celui-ci et des moyens de corrélation du code avec le message reçu, caractérisé en ce que l'émetteur comporte en outre des moyens de génération et de synchronisation de l'horloge du code avec l'horloge de cadencement des données et des moyens de génération d'impulsions de synchronisation des données avec le code d'étalement, les moyens de génération d'impulsions de synchronisation comportant des moyens d'élaboration d'un codage supplémentaire des données à chaque fois qu'une impulsion de synchronisation est délivrée.

D'autres particularités et avantages de l'invention apparaîtront clairement dans la suite de la description donnée à titre d'exemple non limitatif et faite en regard des figures annexées qui représentent :
- la figure 1, un exemple de schéma synoptique d'un dispositif d'émission, selon l'invention ;
- la figure 2, un exemple de chronogrammes des différents signaux intervenant pour la transmission d'une trame de données, selon l'invention ;
- la figure 3, un exemple de schéma synoptique d'un dispositif de réception, selon l'invention.

La technique d'étalement de spectre par séquence directe permet d'effectuer une transmission d'information discrète, confidentielle et résistante aux brouillages. Selon cette technique, à l'émission, le signal à transmettre module une séquence pseudo-aléatoire de valeurs binaires, appelée code d'étalement, dont le débit est beaucoup plus élevé que la largeur de bande du signal utile. A la réception, le signal codé reçu est corrélé avec un code pseudo-aléatoire identique à celui produit à l'émission, dont le calage, par un dispositif de synchronisation, permet de restituer le signal utile initial.

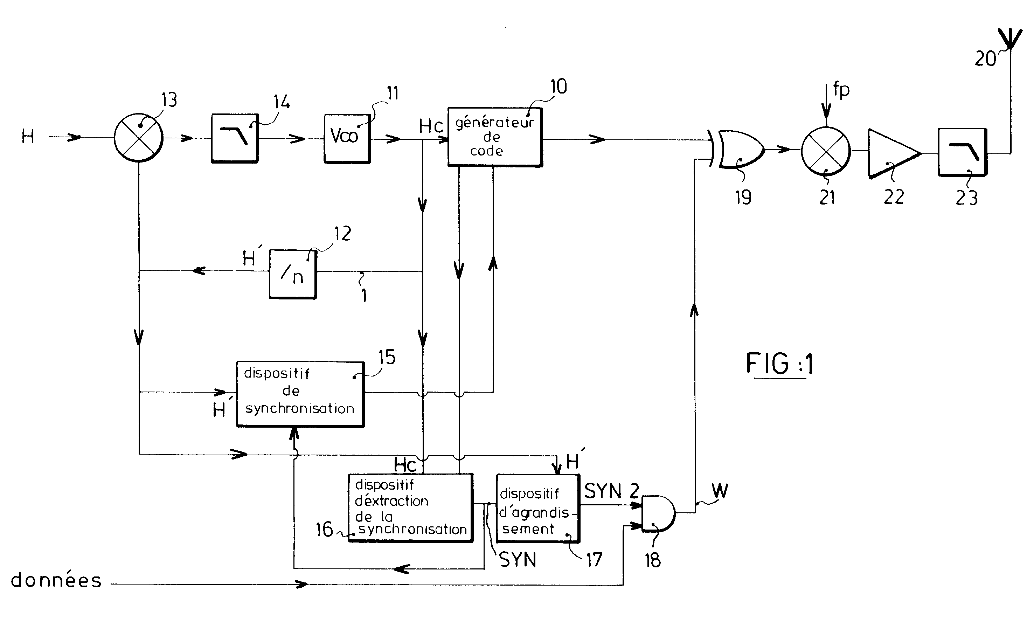

La figure 1 représente un exemple de schéma synoptique d'un dispositif d'émission, selon l'invention.

Le dispositif d'émission comporte des moyens de génération d'un code pseudo-aléatoire synchronisé avec l'horloge d'un message à transmettre, des moyens de génération d'impulsions de synchronisation du message avec le code, des moyens pour mélanger le code avec les données à transmettre, des moyens pour émettre le message codé.

Les moyens de génération du code pseudo-aléatoire comportent un générateur de code 10 commandé par un oscillateur contrôlé en tension 11. L'oscillateur 11 est asservi en tension par une boucle à verrouillage de phase 1, de manière à délivrer un signal d'horloge de code Hc synchronisé avec le signal d'horloge H des données à transmettre. Lorsque les deux horloges sont synchronisées, la fréquence d'horloge du code est égale à un multiple n de la fréquence d'horloge des données. Dans la boucle à verrouillage de phase 1, la fréquence d'horloge délivrée par l'oscillateur 11 est divisée par n dans un diviseur 12 avant d'être comparée à la fréquence d'horloge H des données dans un mélangeur 13. Le signal d'erreur issu de la comparaison est utilisé pour asservir l'oscillateur 11 en tension après filtrage dans un filtre passe-bas 14.

A titre d'exemple, le codage peut être réalisé au moyen de séquences pseudo-aléatoires dites de longueur maximale établies à l'aide d'un registre à décalage en réaction linéaire comportant p étages, chaque étage comportant une bascule D avec remise à zéro. Un tel registre produit une séquence répétitive de bits ayant chacun une quasi-équiprobabilité d'état 0 ou 1. La longueur de la séquence, c'est à dire le nombre de bits total dans la séquence, est égale à 2^{P} -1. Pour que le code pseudo-aléatoire soit synchronisé avec l'horloge des données, il faut que la longueur d'une séquence du code soit égale à un multiple de la fréquence d'horloge des données. Il est donc nécessaire que la relation suivante soit satisfaite : 2^{P} -1 = nH * m, où n et m sont des nombres entiers naturels, H étant la fréquence d'horloge des données, nH étant la fréquence d'horloge délivrée par l'oscillateur 11, m étant le nombre de bits de données dans une largeur de séquence du code.

les moyens de génération d'impulsions de synchronisation du message avec le code comportent un dispositif d'extraction de la synchronisation du code, un dispositif de synchronisation du code, des moyens d'élaboration d'un codage supplémentaire du message à chaque fois que le code d'étalement est dans une position correspondant à un état binaire Ei prédéterminé.

Le dispositif de synchronisation du code 15 est destiné à synchroniser un front montant de l'horloge H' obtenue en sortie du diviseur 12, et le code, à chaque fois qu'il reçoit une impulsion de synchronisation SYN. L'impulsion de synchronisation SYN est délivrée par le dispositif d'extraction de synchronisation 16, lorsque le code pseudo-aléatoire est dans un état Ei prédéterminé.

La synchronisation est effectuée notamment à la mise sous tension pour positionner un front montant de l'horloge H' sur un état Ei préalablement choisi comme état initial. En cours de transmission, cette synchronisation pouvant être modifiée par des parasites, la synchronisation est également effectuée à chaque fois que l'état du code correspond à l'état initial choisi de façon à recaler le front montant de H' sur cet état. A titre d'exemple, dans le cas d'un code linéaire maximal obtenu à partir d'un registre à décalage, l'état initial peut être celui où toutes les sorties des bascules D sont égales à 1. Pour effectuer cette synchronisation, le dispositif d'extraction de la synchronisation 16 reçoit en entrée le signal d'horloge délivré par l'oscillateur 11 et un signal issu du générateur de code 10, ce signal pouvant être pris, par exemple en sortie de la première bascule D du registre à décalage. A partir de ces signaux, le dispositif d'extraction de la synchronisation 16 détecte quel est l'état du code. Lorsque l'état du code correspond à l'état initial Eᵢ, le dispositif d'extraction de la synchronisation 16 délivre en sortie une impulsion de synchronisation SYN. Cette impulsion est transmise sur une première entrée du dispositif de synchronisation du code 15, ce dernier recevant le signal d'horloge H' sur une deuxième entrée. A la réception de cette impulsion SYN, le dispositif de synchronisation du code 15 délivre en sortie un signal commandant la remise à zéro du générateur de code 10, de façon à mettre en phase un front montant de l'horloge H' avec l'état Eᵢ prédéterminé du code et avec le top de synchronisation SYN.

L'impulsion de synchronisation SYN est également utilisée, après agrandissement par un dispositif d'agrandissement 17, pour effectuer un codage supplémentaire "transparent" du message à transmettre. L'agrandissement du top de synchronisation SYN est effectué à partir du signal d'horloge H'. Le codage supplémentaire du message est effectué par une porte logique ET, 18, qui reçoit en entrée d'une part, le signal agrandi SYN2 et d'autre part le message codé W. A titre d'exemple, l'agrandissement du signal de synchronisation peut être effectué sur une demi-période de H' ; dans ce cas le codage supplémentaire est effectué uniquement sur le premier bit de chaque trame du message, une trame du message étant le signal transmis entre deux tops de synchronisation.

Le mélange du code pseudo aléatoire et du message est effectué de manière classique par exemple par une porte OU exclusif, 19, recevant en entrée le signal de sortie du générateur de code 10 et le signal W. Dans le cas où le générateur de code est constitué à partir d'un registre à décalage, le signal de sortie du générateur de code peut être pris en sortie de l'une quelconque des bascules D, mais toujours la même. A titre d'exemple, la dernière bascule D est choisie. Le signal codé est ensuite transmis par une antenne d'émission 20 après transposition dans la bande des hyperfréquences au moyen d'une modulation avec une fréquence porteuse fₚ, la modulation étant réalisée par un modulateur 21 à deux états de phase O-π et après amplification dans un amplificateur 22 et filtrage dans un filtre passe-bas 23.

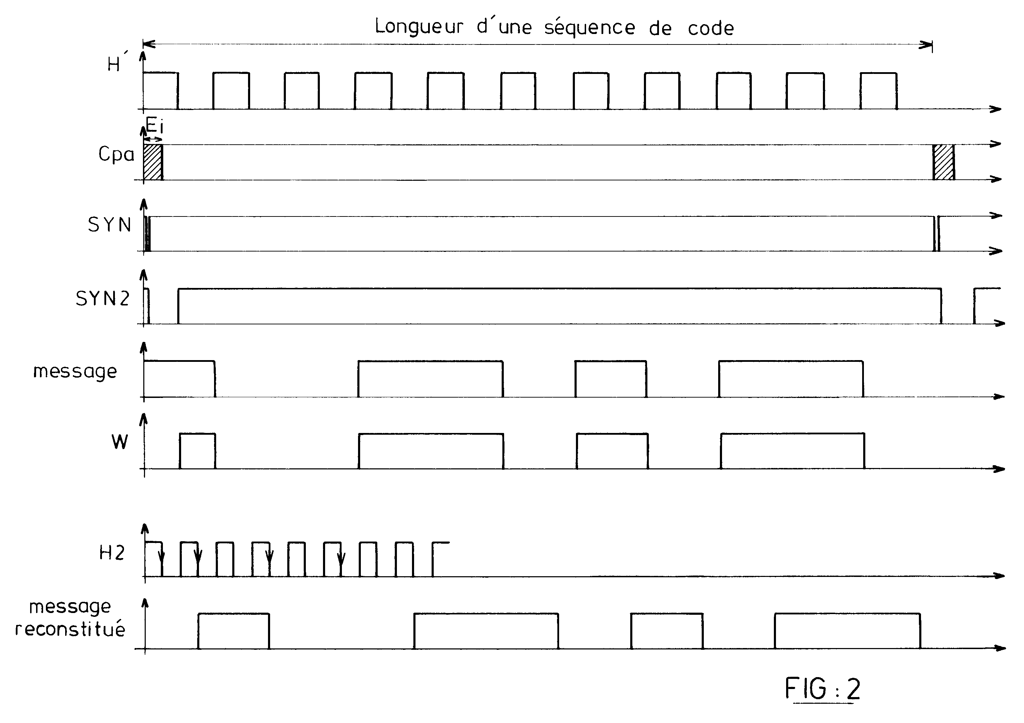

La figure 2 représente un exemple de chronogrammes des différents signaux intervenant pour la transmission d'une trame de données. Ces chronogrammes correspondent au cas particulier d'un générateur de code réalisé à partir d'un registre à décalage à dix étages (p=10), pour une horloge des données de fréquence H=1 MHz, et pour une fréquence d'horloge du code nH égale à 93 MHz (donc n=93).
Dans ces conditions, la longueur du code est égale à 2^{p} -1 = 1023 bits. Le code pseudo aléatoire est synchronisé avec l'horloge des données quand la longueur d'une séquence du code est égale à un multiple de la fréquence d'horloge des données : 2^{P} -1 = nH * m. Cette condition est vérifiée pour une valeur de m égale à 11. Par conséquent, m étant égal au nombre de bits de données dans une longueur d'une séquence de code, le message est transmis par trames de 11 bits; le premier bit de chaque trame étant repéré par un top de synchronisation.

Le premier chronogramme représenté sur la figure 2 correspond à l'horloge H' asservie sur l'horloge des données pour une longueur de séquence de code pseudo-aléatoire. Le deuxième chronogramme représente une longueur de séquence de code comportant 1023 bits tels que les dix premiers bits sont dans l'état initial Eᵢ choisi (par exemple, les dix premiers bits sont à l'état 1). Le troisième chronogramme représente un signal de synchronisation SYN délivré à chaque fois que l'état initial Eᵢ est détecté. Le quatrième chronogramme représente un exemple de signal SYN2 correspondant au signal SYN agrandi sur une demi période de H'. Le cinquième chronogramme représente un exemple de message à transmettre. Le sixième chronogramme représente un signal W obtenu par codage du message à transmettre avec le signal SYN2. La durée du signal SYN2 étant égale à une demie période d'horloge H', seul le premier bit du message à transmettre est codé.

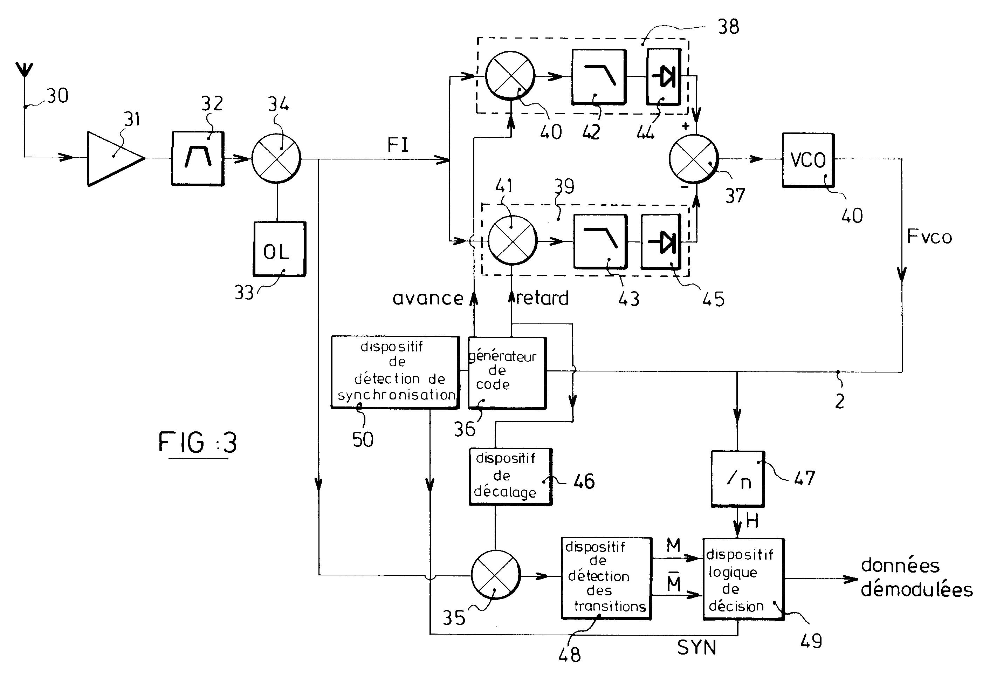

Pour obtenir le signal de synchronisation SYN, la logique négative a été utilisée. De cette façon une transition supplémentaire est rajoutée sur le premier bit de chaque trame du message émis, cette transition étant telle qu'un état binaire égal à zéro est imposé en amont de la transition. Cet état binaire dure une demie période de H' dans l'exemple choisi. Cette transition supplémentaire permet, à la réception, de reconstituer le message sans ambigüité de phase, après simple lecture des deux premiers demi-bits de chaque trame de onze bits. En effet, le message W comporte nécessairement un état zéro sur le premier demi-bit de chaque trame. Par conséquent, si le message reçu comporte un état zéro sur le premier demi-bit d'une trame, le message est gardé sans changement ; dans le cas contraire, si le premier demi-bit est dans l'état 1, le message reçu est faux et décalé en phase de π par rapport au message émis. Son complémentaire est alors choisi. Le deuxième demi-bit indique alors la valeur du premier bit de la trame considérée du message. les deux derniers chronogrammes correspondent à des signaux utilisés à la réception et sont donc expliqués en liaison avec la figure 3.

La figure 3 représente un exemple de schéma synoptique d'un dispositif de réception, selon l'invention.

Le dispositif de réception comporte des moyens pour recevoir le message codé, des moyens de transposition du signal reçu à une fréquence intermédiaire, des moyens de génération d'un code pseudo-aléatoire identique à celui de l'émetteur et synchronisé en retard sur celui-ci, des moyens de décodage du signal reçu. Le message émis est reçu par le récepteur par l'intermédiaire d'une antenne de réception 30. Après amplification dans un amplificateur 31 et filtrage dans un filtre passe-bande 32, le signal reçu est transposé à une fréquence intermédiaire FI au moyen d'une modulation avec une fréquence porteuse choisie provenant d'un oscillateur local 33. La modulation est effectuée par un modulateur 34. Après transposition à la fréquence intermédiaire FI, le signal est appliqué à un deuxième modulateur 35 qui assure le décodage du signal par corrélation avec un code pseudo-aléatoire local identique à celui produit à l'émission, ce code local étant produit par un générateur de code 36. Pour que le décodage soit effectif, le code local et le code reçu doivent être synchronisés. Pour cela, le code local est asservi sur le code reçu par une boucle 2 à verrouillage de retard. L'asservissement est réalisé de manière connue, par exemple en mesurant l'erreur de synchronisation obtenue en effectuant au moyen du modulateur 37 la différence des mesures de corrélation avance et retard obtenues au moyen des deux corrélateurs 38 et 39 par corrélation du signal reçu avec deux versions décalées du code produit par le générateur de code 36, et en utilisant le signal d'erreur pour asservir un oscillateur VCO contrôlé en tension, 40, délivrant l'horloge F_{vco} du générateur de code 36.

Chacun des corrélateurs 38 et 39 comportent respectivement en série, un modulateur 40, 41 recevant le signal codé et une version décalée du code, suivi d'un filtre à bande étroite 42, 43 et d'un détecteur d'enveloppe 44, 45 qui délivre la fonction de corrélation entre le signal codé reçu et la version décalée du code local. A titre d'exemple, le décalage entre les deux voies de corrélation peut être choisi égal à 1 bit. Dans ces conditions, lorsqu'il y a équilibre entre les deux voies, le code local n'est pas en phase avec le code reçu, mais il est décalé d'un demi-bit. par conséquent, le code modulant utilisé pour le décodage du signal reçu est obtenu à partir de la voie retard en décalant le code au moyen d'un dispositif de décalage 46, de un demi-bit en avance, ou à partir de la voie avance en décalant de un demi-bit en retard.

Lorsque la synchronisation entre le code local et le code reçu est effectuée, l'horloge du code local est en phase avec l'horloge du code émis, cette dernière horloge étant elle-même en phase avec l'horloge des données. Par conséquent, une division par n dans un diviseur 47, de l'horloge du code local délivrée par l'oscillateur 40, permet de retrouver sans moyen de reconstitution complexe, l'horloge H des données. Les données peuvent alors être démodulées de façon cohérente et sans ambigüité de phase. Pour cela, le signal obtenu en sortie du modulateur 35 est traité par un dispositif de détection des transitions 48 qui délivre en sortie deux signaux complémentaires correspondant au message M et à son complément M. Ces deux signaux M et M sont ensuite traités par un dispositif logique de décision 49 qui restitue les données démodulées en utilisant l'horloge H des données et le signal de synchronisation du code local délivré par un dispositif de détection de synchronisation 50 connecté en sortie du générateur de code 36. Le dispositif logique de décision 49 traite le message par trame de onze bits de données.
Il effectue d'abord la lecture des deux premiers demi-bits de chaque trame pour déterminer si le message correspond au message émis et doit être gardé tel quel ou s'il faut choisir son complément. la lecture des deux premiers demi-bits est effectuée en considérant une horloge H2 obtenue par une division par deux de l'horloge reconstituée des données et en échantillonnant le signal sur les fronts descendants des impulsions de l'horloge H2. En fonction du résultat obtenu, les données reçues, ou leur complément, sont ensuite échantillonnées sur les fronts descendants de l'horloge H2, l'échantillonnage étant effectué une impulsion sur deux.

Les deux derniers chronogrammes représentés sur la figure 2 illustrent l'horloge H2 ainsi que le message reconstitué obtenu en sortie du dispositif logique de décision 49. le signal reconstitué est décalé du signal utile de 3/4 de période de l'horloge H des données. Ce décalage correspond au temps nécessaire au dispositif logique de décision 49 pour lire les deux premiers demi-bits et prendre sa décision.

La présente invention n'est pas limitée à l'exemple de réalisation précisément décrit. Notamment le registre a décalage délivrant le code d'étalement peut comporter un nombre d'étages différent ; l'état du code Eᵢ choisi comme état initial peut être n'importe quel état ; le codage "transparent" du message peut être effectué sur une durée différente de la demi-période de l'horloge des données.

## Revendications

1. Procédé de transmission numérique à étalement de spectre par séquence directe selon lequel à l'émission, un code d'étalement pseudo-aléatoire élaboré à partir d'une horloge de code est modulé par des données constituant un message à transmettre, ces données ayant un débit imposé par une horloge de cadencement et à la réception, le message est corrélé avec un code pseudo-aléatoire identique à celui utilisé à l'émission et calé sur celui-ci, caractérisé en ce qu'il consiste à l'émission d'une part, à synchroniser l'horloge du code avec l'horloge de cadencement des données et à synchroniser les données sur le code d'étalement, la synchronisation des données sur le code d'étalement étant effectuée pour une position du code correspondant à un état binaire prédéterminé, d'autre part à effectuer un codage supplémentaire sur un bit de donnée à chaque fois que le code d'étalement est dans la position correspondant à l'état binaire prédéterminé.

2. Procédé selon la revendication 1, caractérisé en ce que l'horloge du code est asservie sur l'horloge des données de façon que la fréquence d'horloge du code soit égale à un multiple de la fréquence d'horloge des données.

3. Procédé selon la revendication 2,caractérisé en ce que le code d'étalement est composé d'une séquence répétitive d'états binaires, la longueur d'une séquence étant choisie de façon qu'il y ait un nombre entier de bits de données dans une séquence de code.

4. Procédé selon la revendication 3,caractérisé en ce que une impulsion de synchronisation des données sur le code d'étalement est délivrée à chaque fois que le code d'étalement est dans la position correspondant à l'état binaire prédéterminé, les données transmises entre deux impulsions de synchronisation constituant une trame du message.

5. Procédé selon l'une quelconque des revendications précédentes, caractérisé en ce que le codage supplémentaire consiste à rajouter une transition supplémentaire dans le premier bit de donnée de chaque trame et à imposer un état binaire égal à zéro en amont de cette transition.

6. Procédé selon la revendication 5, caractérisé en ce qu'il consiste en outre à la réception, pour chaque trame du message, à détecter les transitions ; à lire le premier bit de donnée, à déterminer, selon la valeur de l'état binaire en amont de la transition supplémentaire, si le message reçu et corrélé avec le code pseudo-aléatoire correspond au message émis ou à son complémentaire ; à restituer les données émises.

7. Dispositif de transmission numérique à étalement de spectre par séquence directe comportant un émetteur et au moins un récepteur, l'émetteur comportant des moyens de génération d'un code pseudo-aléatoire à partir d'une horloge de code et des moyens de corrélation du code avec des données constituant un message à transmettre, ces données ayant un débit imposé par une horloge de cadencement, et le récepteur comportant des moyens de génération d'un code pseudo-aléatoire identique à celui utilisé à l'émission et calé sur celui-ci et des moyens de corrélation du code avec le message reçu, caractérisé en ce que l'émetteur comporte en outre des moyens de génération et de synchronisation de l'horloge du code avec l'horloge de cadencement des données et des moyens de génération d'impulsions de synchronisation des données avec le code d'étalement, les moyens de génération d'impulsions de synchronisation comportant des moyens d'élaboration d'un codage supplémentaire des données à chaque fois qu'une impulsion de synchronisation est délivrée.

8. Dispositif selon la revendication 7, caractérisé en ce que les moyens de génération et de synchronisation de l'horloge de code avec l'horloge de cadencement des données, comportent un oscillateur contrôlé en tension (11) destiné à délivrer un signal de sortie constituant l'horloge du code (Hc), et des moyens d'asservissement de ce signal de sortie sur l'horloge de cadencement (H) des données.

9. Dispositif selon la revendication 8, caractérisé en ce que les moyens d'asservissement comportent, dans une boucle à verrouillage de phase (1), un diviseur (12) recevant le signal de sortie de l'oscillateur contrôlé en tension (11) et un mélangeur (13) pour comparer le signal de sortie du diviseur (12) au signal d'horloge de cadencement des données.

10. Dispositif selon la revendication 7, caractérisé en ce que les moyens d'élaboration du codage supplémentaire comportent un dispositif (17) d'agrandissement de l'impulsion de synchronisation et une porte logique ET (18) destinée à effectuer le codage du message par l'impulsion de synchronisation agrandie.

11. Dispositif selon l'une quelconque des revendications 7 à 10, caractérisé en ce que les moyens de génération d'impulsions de synchronisation comportent en outre :
- un dispositif (16) d'extraction de la synchronisation du code pour délivrer une impulsion de synchronisation à chaque fois que le code d'étalement est dans un état prédéterminé,
- un dispositif (15) de synchronisation du code pour synchroniser le signal issu du diviseur (12), l'impulsion de synchronisation, et l'état prédéterminé du code,

12. Dispositif selon la revendication 11, caractérisé en ce que le récepteur comporte en outre un dispositif (48) de détection des transitions et un dispositif logique de décision (49) pour restituer les données émises.
